# EUROPEAN PATENT SPECIFICATION

(11) **EP 1 338 497 B1**
(45) Date of publication and mention of the grant of the patent: **19.01.2005**
(21) Application number: 03004265.9
(22) Date of filing: 26.02.2003
(51) Int. Cl.: B62H 1/02

(54) **Position detecting device for a side stand of a motorcycle**
Positionserkennungsvorrichtung für den Seitenständer eines Motorrads
Dispositif de détection de position pour la béquille latérale d'une motocyclette

(30) Priority: 26.02.2002 JP 2002049758
(43) Date of publication of application: 27.08.2003
(73) Proprietor: Asahi Denso Co., Ltd., Hamakita-shi, Shizuoka (JP)
(72) Inventor: Muramatsu, Naoya, Hamakita-shi, Shizuoka (JP)
(74) Representative: Grünecker, Kinkeldey, Stockmair & Schwanhäusser Anwaltssozietät

(56) References cited:
- EP-A- 1 264 760
- DE-A- 10 002 731
- US-A- 4 016 538
- US-A- 4 883 284
- PATENT ABSTRACTS OF JAPAN vol. 014, no. 142 (E-0904), 16 March 1990 (1990-03-16) & JP 02 007314 A (ASAHI DENSO KK;OTHERS: 02), 11 January 1990 (1990-01-11)
- PATENT ABSTRACTS OF JAPAN vol. 2002, no. 02, 2 April 2002 (2002-04-02) & JP 2001 270481 A (DENSO CORP), 2 October 2001 (2001-10-02)

## Description

### BACKGROUND OF THE INVENTION

### 1. Field of the Invention

The present invention relates to a position detecting device according to the preamble portion of claim 1.

### 2. Description of the Related Art

A device of the above type is known from US-A-4883284. Usually, the side stand for a motorcycle is attached to the motorcycle so as to be rotatable between a stand position, where the tip of the side stand is in contact with the ground so that the motorcycle is supported in an upright state, and a storage position, where the tip of the side stand is separated from the ground so that the side stand is housed in the motorcycle. However, before running the motorcycle, it is necessary to rotate the side stand at the stand position to the storage position.

In order to prevent the motorcycle from being run while such a rotating operation is being forgotten (i.e. the side stand is being located at the stand position), JP-A-2-7314 discloses a technique for detecting whether the side stand is located at the stand position or the storage position, thereby calling attention to a driver.

The position detecting device for a side stand disclosed in the above publication is provided with a cam face formed on the base side of the side stand and a plunger which is in contact with the came face and slides with a rotating operation of the side stand.

The position of the side stand is detected by switching a contact which is connected or disconnected by the sliding operation of the plunger.

However, the above position detecting device for a side stand presented a problem that since the cam face used to slide the plunger is formed on the side of the base of the side stand, accident error of combining the side stand and plunger with a vehicle lowers the detecting accuracy of the position of the side stand. Specifically, since the cam and plunger in the above detecting device are individually combined with the vehicle as individual components, accident error in each combining operation may make it impossible to carry out a desired operation of the plunger with the rotation of the side stand and hence may lower the detecting accuracy.

Where the above position detecting device is newly built into the conventional vehicle which does not detect the position of the side stand, not only the position detecting device must be installed, but also the cam face must be newly formed on the side of the base. This increases cost taken for new set-up of a device. Further, since a contact portionbetween the cam face and the plunger tip is exposed externally, the foreign matter such as dust may invade the contact portion, and hence the detecting accuracy may be lowered.

### SUMMARY OF THE INVENTION

The present invention has been accomplished in view of such a circumstance, and intends to provide a position detecting device for a side stand according to claim 1, which can improve the detecting accuracy of the position of the side stand and suppress cost taken for new set-up of a device.

The present invention described in a first aspect is a position detecting device for a side stand for detecting whether the side stand, which rotates between a storage position and a stand position around a supporting shaft attachable to a bracket of a motorcycle, is located at either the storage position or the stand position, having a position detecting device body fixable to the supporting shaft, a cam member with a cam face formed partially thereof accommodated within the position detecting device body and rotatable together with the side stand, a plunger arranged within the position detecting device body and having a tip in contact with the cam face of the cam member, the plunger sliding as the cam member rotates, a fixed contact fixed within the position detecting device body, and a movable contact which connects to or disconnects from the fixed contact by a sliding operation of the plunger, whereby the position of the side stand is detected on the basis of the connecting state between the movable contact and the fixed contact.

According to such a configuration, as the side stand rotates around the supporting shaft between the storage position and the stand position, the cam member also rotates so that the plunger with the tip in contact with the cam face slides. When the plunger slides, the fixed contact and movable contact which have been separated from each other are connected to each other. Therefore, the position of the side stand (either the storage position or the stand position) can be detected.

The present invention further discloses that the cam member is formed of a cylindrical member, and attachable to the supporting shaft so that it can protrude toward the side of the motorcycle thereby forming a protruding portion which has a small diameter portion with the cam face.

The present invention further discloses that the cam member has a coupling plate that can protrude toward the side stand, and the coupling plate can be fit into a hole made at a prescribed position of the side stand so that the cam member is coupled with the side stand.

In addition to this, the present invention is a motorcycle comprising the position detecting device for the side stand according to anyone of the first to third aspects of the present invention, wherein the position detecting device for the side stand is electrically connected to an engine of the motorcycle so as to control the engine.

It is preferable that the motorcycle according to the above construction, wherein, unless the storage position of the side stand is detected, the engine is prevented from permitting to start.

It is preferable that the motorcycle according to the above construction, wherein, where the engine is started with the side stand being located at the stand position, a warning light arranged on an indicator is lit, or warning sound is generated by a buzzer so that the attention of a driver is attracted.

### BRIEF DESCRIPTION OF THE DRAWINGS

Fig. 1 is an exploded perspective view showing the state before the position detecting device for a side stand according to an embodiment of the present invention is built into a motorcycle;
Fig. 2 is an exploded perspective view showing the state after the position detecting device for a side stand according to an embodiment of the present invention has been built into a motorcycle;
Fig. 3 is a sectional view when the position detecting device for a side stand according to an embodiment of the present invention is viewed from the side;
Fig. 4 is a sectional view when the position detecting device for a side stand according to an embodiment of the present invention is viewed from the above;
Fig. 5 is a perspective view of a cam member and plunger in the position detecting device for a side stand according to an embodiment of the present invention;
Fig. 6 is a sectional schematic view showing the operation of the position detecting device for a side stand according to an embodiment of the present invention (when the side stand is located at the storage position) ;
Fig. 7 is a sectional schematic view showing the operation of the position detecting device for a side stand according to an embodiment of the present invention (when the side stand is located at the stand position) ; and,
Fig. 8 is a block diagram showing the relationship among components loaded in a motorcycle in the position detecting device for a side stand according to an embodiment of the present invention.

### DETAILED DESCRIPTION OF THE PREFERRED EMBODIMENTS

Now referring to the drawings, a concrete explanation will be given of an embodiment of the present invention.

The position detecting device for a side stand according to an embodiment of the present invention serves to detect whether the side stand, which rotates between a storage position and a stand position around a supporting shaft attached to the one side of a motorcycle, is located at either the storage position or the stand position, thereby preventing the motorcycle from being run while the side stand is being located at the stand position.

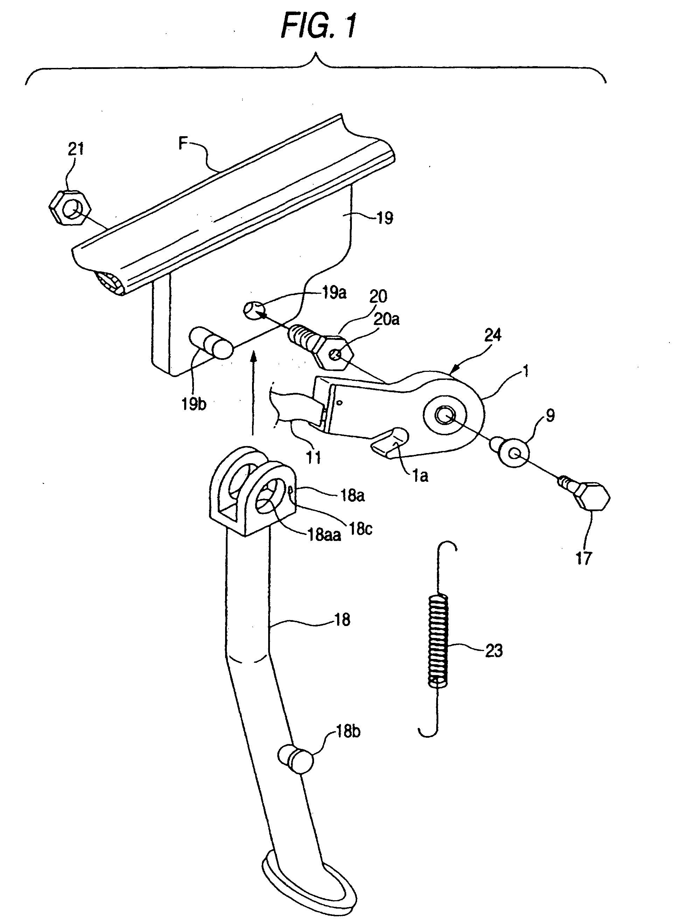

As seen from Fig. 1, a body frame F of a motorcycle is provided with a bracket 19 for attaching a side stand 18. The bracket 19 has an attachment hole 19a and a boss 19b. An attachment 18a formed at a base end of the side stand 18 is fit to the bracket 18, and a hole 18aa formed in the attachment 18a is mated with the attachment hole 19a. Thereafter, a fixing bolt 20 is passed through these hole 18aa and the attachment hole 19a.

The tip side of the fixing bolt 20 is engaged with a nut 21 from an opposite side of the bracket 19. Namely, the side stand 18 is adapted to rotate between a stand position and a storage position around the fixing bolt 20. Incidentally, a boss 18b is formed on the side of the side stand 18. A return spring 23 is suspendedbetween the boss 18b and a boss 19b formed on the bracket 19 to elastically hold the side stand at the stand position or the storage position.

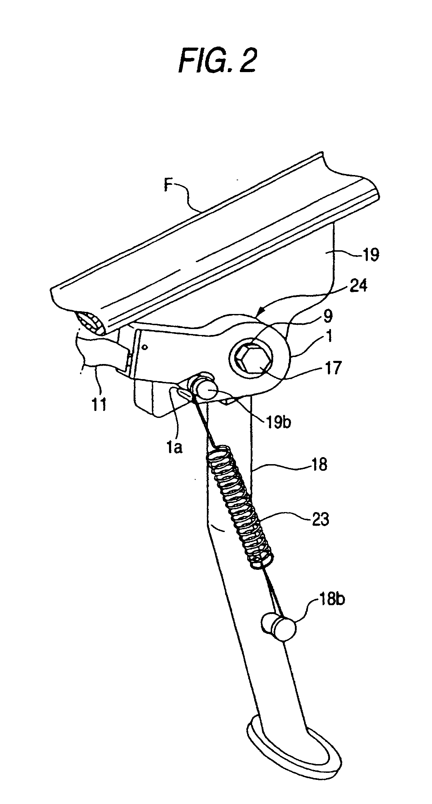

At the head of the fixing bolt 20, a screw hole 20a having an internal thread on the internal face is formed. An attaching thread 17 is threaded through the screw hole 20a with a position detecting device 24 (including a color 9) according to this embodiment being located there between. By such threading, as seen from Fig. 2, the position detecting device 24 is fixed in the vicinity of the fixing bolt 20 of the bracket 19 so that the position of the side stand 18 is detected. Incidentally, since the attaching thread 17 is secured to the fixing bolt 20 which serves as a supporting shaft of the side stand 18, when the fixing bolt 20 rotates together with the side stand 18, the attaching thread 17 also rotates.

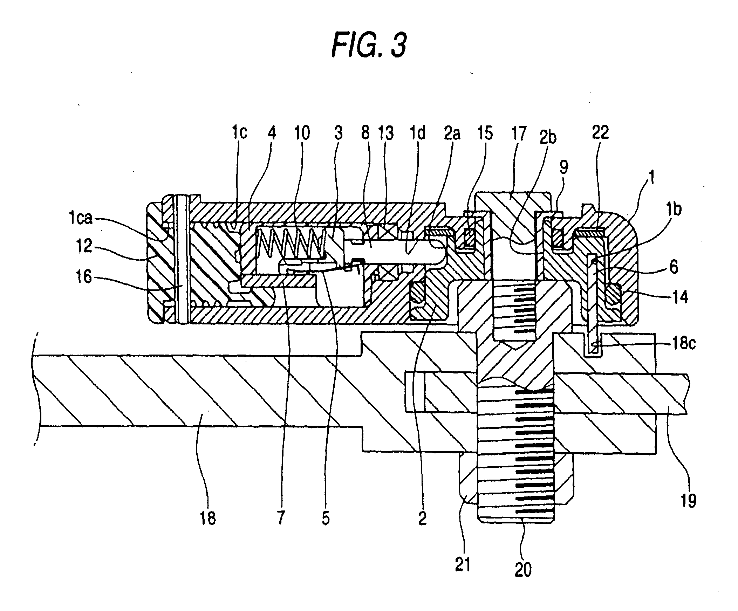

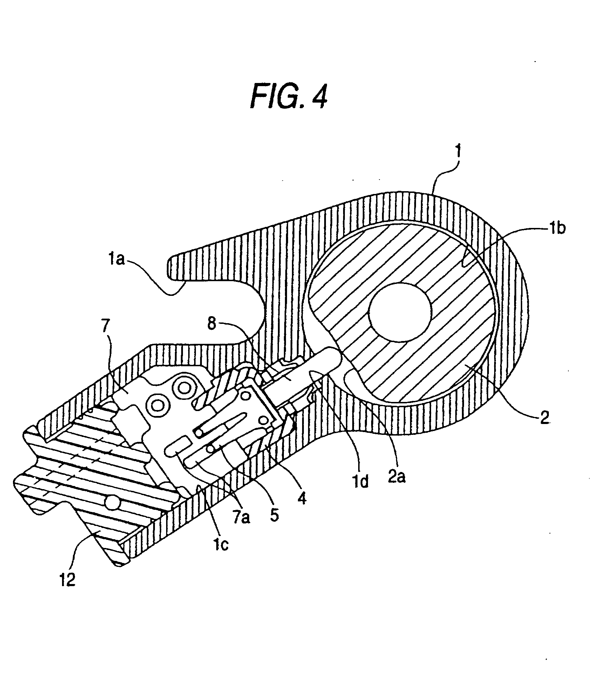

As seen from Figs. 3 and 4, the position detecting device 24 mainly includes a position detecting device body 1, a cam member 2 and a case 4 having a plunger 8. By fitting the boss 19b in a recess 1a formed in the position detecting device body 1, the position detecting device 24 is fixed to the bracket 19 of the motorcycle.

The position detecting device body 1, which is a resin molded component, serves as a box for the position detecting device 24. The position detecting device body 1 has a first accommodating space 1b for accommodating the cam member 2 and a second accommodating space 1c for accommodating the plunger 8, contacts (fixed contacts 7a and movable contact 5 described later), etc. The first accommodating space 1b is a concave space which is opened toward the side stand 18 (Fig. 3). The second accommodating space 1c is a space in which a grommet 12 is pressed in an opening 1ca opened at the end of the position detecting device body 1. Incidentally, reference numeral 16 denotes a spring pin.

The grommet 12 is pressed in the opening 1ca to seal the second accommodating space 1c. The grommet 12 serves to prevent water or a foreign matter from invading from the opening 1ca and secures the case 4 at a prescribed position within the second accommodating space 1c. On the other hand, between the first accommodating space 1b and the second accommodating space 1c, a coupling hole ld is formed for coupling these accommodating spaces. The plunger is passed through the coupling hole 1d.

The cam member 2, which is formed of a cylindrical member made of resin, is arranged to be rotatable in the position detecting device body 1. Specifically, at the center of the cam member 2, a hole 2b is vertically made so as to pass through the cammember 2. An attaching thread is threaded into the hole 2b through a color 9.

The above cam member 2 protrudes from the fixing bolt 20 toward the side of the motorcycle. A part of the side of the protruding portion having a small diameter is served as a cam face 2a. Specifically, the portion (fixing bolt 20) which rotates with the side stand 18 is protruded to extend toward the motorcycle by the height of the cam member 2, and the tip of the plunger 8 is kept in contact with the cam face 2a formed in the protruding portion.

Thus, the plunger 8 can be offset toward the side of the motorcycle (width direction of the vehicle) thereby reducing the installing distance of the position detecting device 24 in the longitudinal direction. Specifically, since the plunger 8 is offset, the installing distance of the position detecting device 24 is increased in the width direction of the vehicle. However, since the tip of the plunger 8 is kept in contact with the cam face 2a which is a small diameter portion of the cam member 2, the installing distance of the position detecting device 24 can be reduced.

The cam member 2 has a coupling plate 6 which protrudes toward the side stand 18 at the edge of the surface of the cam. The coupling plate 6 is fit into a hole made at a prescribed position of the side stand 18 so that the cam member 2 is coupled with the side stand 18. Therefore, the rotating operation of the side stand 18 is transmitted to the cam member 2 via the coupling plate 6 so that the cam member 2 can be rotated together with the side stand 18.

If the coupling plate 6 is arranged in a predetermined positional relationship with the cam face 2a, when the coupling plate 6 is fit in the hole 18c, the cam face 2a can be oriented in a prescribed direction. Therefore, the initial positions of the cam face 2a and the plunger 8 can be easily set. This further improves the detecting accuracy of the position of the side stand 18.

In Fig. 3, reference numeral 22 denotes a smoothing member 22 on the surface of which the cam member 2 can smoothly slide. In the same figure, reference numerals 14 and 15 denote an O-ring, respectively, which serve to prevent the water or foreign matter, which has invaded the first accommodating space 1b from a gap between the cam member 2 and position detecting device body 1, from invading the side of the plunger 8 (side of the second accommodating space 1c).

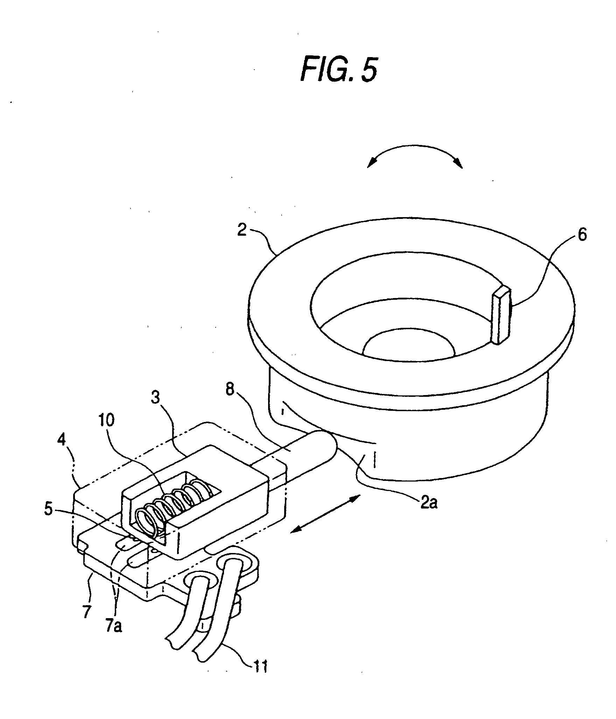

The plunger 8 is arranged within a resin case 4 accommodated in the second accommodating space 1c of the position detecting body 1. The tip of the plunger 8 is in contact with the cam face 2a and slides with the rotation of the cammember 2. More specifically, as seen from Figs. 4 and 5, a roller 3 which is slidable in a longitudinal direction is arranged in the case 4. The plunger 8 is attached to the one end of the roller 3, and a spring 10 is attached to the other end of the roller 3. The spring 10 is suspended between the other end of the roller 3 and the case 4.

Because of the provision of the spring 10, the roller 3 is always urged toward the cam member 2 so that the tip of the plunger 8 can be kept in contact with the cam face 2a. Specifically, since the plunger 8 is always pressed on the cam face 2a, when the cam member 2 rotates, the plunger 8 moves in or out from the case 4 along the profile of the cam face 2a, and thereby the roller 3 is slid in the longitudinal direction of the case 4. Incidentally, an oil seal 8 is arranged on the outer surface to carry out the sliding operation of the plunger 8 smoothly.

A substrate 7 having fixed contacts 7a is arranged within the case 4, whereas the roller 3 has a movable contact 5 so as to be opposite to the fixed contacts 7a. Therefore, by the sliding operation of the plunger 8 and the roller 3, the movable contact 5 is connected with or disconnected from the fixed contacts 7a. The connecting state is transmitted to an ECU loaded on the motorcycle through codes 11.

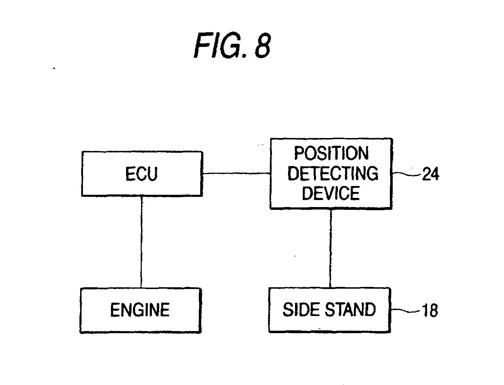

Specifically, as seen from Fig. 8, the position detecting device 24 is mechanically coupled with the side stand 18 and also electrically coupled with the ECU through the cords 11. When the movable contact 5 is connected with the fixed contacts 7a, an electric signal flows through the ECU so that the position of the side stand 18 can be recognized. Incidentally, the codes 11 are extended to the ECU through through-holes formed in the. grommet 12.

The ECU is electrically connected to an engine of the motorcycle so that it can control the engine. Therefore, the ECU can be designed so that unless it is detected that the side stand 18 is at the storage position, the engine is not permitted to start.

Further, where the engine is started with the side stand being located at the stand position, a warning light arranged on an indicator may be lit, or otherwise warning sound may be generated by a buzzer so that the attention of a driver is attracted.

An explanation will be given of the operation of the position detecting device for a side stand having the configuration as described above.

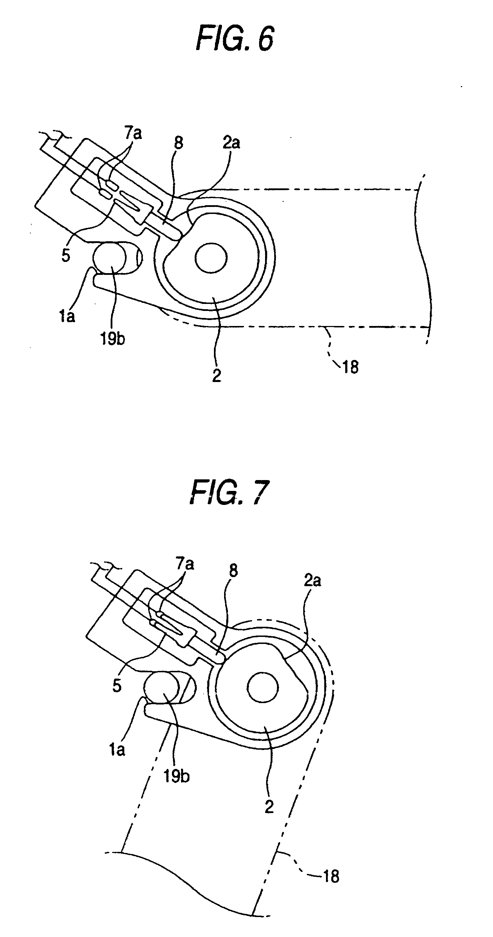

When the side stand 18 is located at the storage position, as seen from Fig. 6, the tip of the plunger 8 is in contact with the cam face 2a of the cam member 2 so that the movable contact 5 of the roller 3 is disconnected from the fixed contacts 7a. In this state, since the electric signal does not flows through the ECU, the ECU recognizes that the side stand 18 is located at the storage position, thereby permitting the engine to start.

On the other hand, when the side stand 18 rotates to the stand position, as seen from Fig. 7, the tip of the plunger is brought into contact with a side face of the cam member 2 which is different from the cam face 2a so that the plunger 8 slides in a direction leaving the cam member 2 and hence the movable contact 5 of the roller 3 is connected to the fixed contacts 7. In this case, the electric signal flows through the ECU so that the ECU recognizes that side stand 18 is located at the stand position, thereby not permitting the engine to start. Otherwise, a warning such as lighting of the warning light is issued.

In accordance with the embodiment described above, since both the cam member 2 and the plunger 8 are arranged within the position detecting device body 1, when they are built into the vehicle, the combination error between the cam member 2 and the plunger 8 can be prevented from being produced, thereby improving the detecting accuracy for the position of the side stand 18. Further, since the cam member 2 is independent of the side stand 18 and also accommodated within the position detecting device body 1, this embodiment can be easily applied to the side stand 18 not having the cam face 2a, thereby suppressing the cost for new set-up of a device.

Although this embodiment has been explained hitherto , the present invention should not be limited to this embodiment. For example, as long as in interlock with the supporting shaft which rotates with the side stand, the rotation of the supporting shaft is converted into the sliding operation, the cam may be made in a different shape. Further, in this embodiment, when the side stand 18 is located at the storage position, the movable contact is connected to the fixed contacts. However, when the side stand 18 is located at the stand position, the movable contact may be connected to the fixed contacts so that it is detected that the side stand is located at either position by detecting the stand position.

Further, in this embodiment, the storage position and stand position of the side stand is detected using a simple ON-OFF circuit. However, these storage position and stand position may be detected by any other various means (e.g. a selector switch).

In accordance with the present invention described in the first aspect, since both the cam member and the plunger are arranged within the position detecting device body, when they are built into the vehicle, the combination error between the cam member and the plunger can be prevented from being produced, thereby improving the detecting accuracy for the position of the side stand.

Further, since the cam member is independent of the side stand and also accommodated within the position detecting device body, the present invention can be easily applied to the side stand not having the cam face, thereby suppressing the cost taken for new set-up of a device.

In accordance with the present invention described in a second aspect, since a small diameter portion of a protruding portion of the cam member formed of a cylindrical member has a cam face, the plunger can be offset toward the side of the motorcycle (width direction of the vehicle) thereby reducing the installing distance of the position detecting device in the longitudinal direction (direction of extending the plunger).

In accordance with the present invention described in the third aspect, the cam member is provided with a coupling plate, and the coupling plate is fit into a hole of the side stand so that the cam member is coupled with the side stand. Therefore, the rotating operation of the side stand can be transmitted to the cam member through the coupling plate, and the initial positions of the cam member and the plunger can be easily set. This further improves the detecting accuracy of the position of the side stand.

## Claims

1. A position detecting device (24) for a side stand (18) for detecting whether the side stand (18), which is rotatable between a storage position and a stand position around a supporting shaft (20) attachable to a bracket (19) of a motorcycle, is located at either the storage position or the stand position, the position detecting device (24) comprising:
a position detecting device body (1) fixable to the supporting shaft (20);
a cam member (2) with a cam face (2a) formed partially thereof accommodated within the position detecting device body (1) and rotatable together with the side stand (18);
a fixed contact (7a) fixed within the position detecting device body (1), and
a movable contact (5) whereby the position of the side stand (18) is detectable on the basis of the connecting state between the movable contact (5) and the fixed contact (7a), **characterised by** a plunger(8) arranged within the position detecting device body (1) and having a tip in contact with the cam face (2a) of the cam member (2), the plunger (8) sliding as the cam member (2) rotates; the movable contact connects to or disconnects from the fixed contact (7a) by a sliding operation of the plunger (8).

2. The position detecting device (24) for the side stand (18) according to claim 1, **characterised in that** the cam member (2) is formed of a cylindrical member, and attachable to the supporting shaft (20) so that it can protrude toward the side of a motorcycle thereby forming a protruding portion which has a small diameter portion with the cam face (2a).

3. The position detecting device (24) for the side stand (18) according to claim 1 or 2, **characterised in that** the cam member (2) has a coupling plate (6) that can protrude toward the side stand (18), and the coupling plate (6) can be fit into a hole (18c) made at a prescribed position of the side stand (18) so that the cam member (2) can be coupled with the side stand (18).

4. A motorcycle comprising the side stand (18) with the position detecting device (24) according to any one of claims 1 to 3, wherein the position detecting device (24) is electrically connected to an engine of the motorcycle so as to control the engine.

5. The motorcycle according to claim 4, wherein, unless the storage position of the side stand (18) is detected, the engine is prevented from permitting to start.

6. The motorcycle according to claim 4, wherein, where the engine is started with the side stand (18) being located at the stand position, a waming light arranged on an indicator is lit, or warning sound is generated by a buzzer so that the attention of a driver is attracted.

## Patentansprüche

1. Positionserfassungsvorrichtung (24) für einen Seitenständer (18), die erfasst, ob sich der Seitenständer (18), der zwischen einer Verstauposition und einer Stehposition um eine Tragewelle (20) herum gedreht werden kann, die an einer Halterung (19) eines Motorrads angebracht werden kann, entweder in der Verstauposition oder der Stehposition befindet, wobei die Positionserfassungsvorrichtung (24) umfasst:
einen Positionserfassungsvorrichtungs-Körper (1), der an der Tragwelle (20) befestigt werden kann;
ein Kurvenelement (2) mit einer Kurvenfläche (2a), die teilweise daraus ausgebildet ist, das in dem Positionserfassungsvorrichtungs-Körper (1) aufgenommen ist und zusammen mit dem Seitenständer (18) gedreht werden kann;
einen festen Kontakt (7a), der in dem Positionserfassungsvorrichtungs-Körper (1) fixiert ist; und
einen beweglichen Kontakt (5), wobei die Position des Seitenständers (18) auf Basis des Verbindungszustandes zwischen dem beweglichen Kontakt (5) und dem festen Kontakt (7a) erfasst werden kann, **gekennzeichnet durch** einen Kolben (8), der in dem Positionserfassungsvorrichtungs-Körper (1) angeordnet ist und ein vorderes Ende hat, das mit der Kurvenfläche (2a) des Kurvenelementes (2) in Kontakt ist, wobei der Kolben (8) gleitet, wenn sich das Kurvenelement (2) dreht und der bewegliche Kontakt **durch** einen Gleitvorgang des Kolbens (8) mit dem stationären Kontakt (7a) verbunden oder von ihm getrennt wird.

2. Positionserfassungsvorrichtung (24) für den Seitenständer (18) nach Anspruch 1, **dadurch gekennzeichnet, dass** das Kurvenelement (2) aus einem zylindrischen Element besteht und an der Tragewelle (20) so angebracht werden kann, dass es zur Seite eines Motorrades hin vorstehen kann und so einen vorspringenden Abschnitt bildet, der einen Abschnitt mit kleinem Durchmesser mit der Kurvenfläche (2a) hat.

3. Positionserfassungsvorrichtung (24) für den Seitenständer (18) nach Anspruch 1 oder 2, **dadurch gekennzeichnet, dass** das Kurvenelement (2) eine Verbindungsplatte (6) hat, die auf den Seitenständer (18) zu vorstehen kann, und die Verbindungsplatte (6) in ein Loch (18c) eingepasst werden kann, das an einer vorgeschriebenen Position des Seitenständers (18) ausgebildet ist, so dass das Kurvenelement (2) mit dem Seitenständer (18) verbunden werden kann.

4. Motorrad, das den Seitenständer (18) mit der Positionserfassungsvorrichtung (24) nach einem der Ansprüche 1 bis 3 umfasst, wobei die Positionserfassungsvorrichtung (24) elektrisch mit einem Motor des Motorrades verbunden ist, um den Motor zu steuern.

5. Motorrad nach Anspruch 4, wobei, wenn die Verstäuposition des Seitenständers (18) nicht erfasst wird, verhindert wird, dass der Motor Starten zulässt.

6. Motorrad nach Anspruch 4, wobei, wenn der Motor gestartet wird und sich der Seitenständer (18) in der Stehposition befindet, eine Wamleuchte, die an einer Anzeige angeordnet ist, aufleuchtet, oder ein Wamton durch einen Summer erzeugt wird, so dass die Aufmerksamkeit eines Fahrers erregt wird.

## Revendications

1. Dispositif de détection de position (24) d'une béquille latérale (18) afin de détecter si la béquille latérale (18), pouvant tourner entre une position inactive et une position active autour d'un arbre support (20) pouvant être fixé à un support (19) d'une motocyclette, se trouve soit en position inactive, soit en position active, le dispositif de détection de position (24) comprenant:
un corps (1) de dispositif de détection de position pouvant être fixé à l'arbre support (20);
une came (2) avec une face de came (2a) formant une partie de celle-ci logée à l'intérieur du corps (1) du dispositif de détection de position et pouvant tourner conjointement avec la béquille latérale (18);
un contact fixe (7a) fixé à l'intérieur du corps (1) du dispositif de détection de position; et
un contact mobile (5) de telle sorte que la position de la béquille latérale (18) puisse être détectée en fonction de l'état de connexion entre le contact mobile (5) et le contact fixe (7a), **caractérisé par** un plongeur (8) disposé à l'intérieur du corps (1) du dispositif de détection de position et ayant une extrémité en contact de la face de came (2a) de la came (2), le plongeur (8) glissant lorsque la came (2) tourne; le contact mobile vient en contact ou non du contact fixe (7a) par une opération de glissement du plongeur (8).

2. Dispositif de détection de position (24) de la béquille latérale 18) selon la revendication 1, **caractérisé en ce que** la came (2) est constituée par un élément cylindrique, et pouvant être fixé à l'arbre support (20) de manière à pouvoir faire saillie vers le côté de la motocyclette formant ainsi une partie saillante possédant une partie à faible diamètre avec la face de came (2a).

3. Dispositif de détection de position (24) de la béquille latérale (18) selon la revendication 1 ou 2, **caractérisé en ce que** la came (2) possède une plaque de couplage (6) pouvant faire saillie vers la béquille latérale (18), et la plaque de couplage (6) pouvant être ajustée dans un trou (18c) pratiqué en une position prescrite de la béquille latérale (18) de sorte que la came (2) puisse être couplée à la béquille latérale (18).

4. Motocyclette comprenant la béquille latérale (18) équipée du dispositif de détection de position (24) selon l'une quelconque des revendications 1 à 3, dans laquelle le dispositif de détection de position (24) est électriquement connecté à un moteur de la motocyclette de manière à commander le moteur.

5. Motocyclette selon la revendication 4, dans laquelle, sauf si la position inactive de la béquille latérale (18) est détectée, le moteur est empêché de pouvoir démarrer.

6. Motocyclette selon la revendication 4, dans laquelle, lorsque le moteur est démarré avec la béquille latérale (18) se trouvant en position active, un voyant disposé sur un indicateur est allumé, ou une alarme sonore est générée par un vibreur de manière à attirer l'attention du conducteur.
